# EUROPEAN PATENT APPLICATION

(11) **EP 0 687 841 A2**
(43) Date of publication of application: **20.12.1995**
(21) Application number: 95107349.3
(22) Date of filing: 15.05.1995
(51) Int. Cl.: F16K 5/06

(54) **Ball valve**

(30) Priority: 19.05.1994 IT PG940008 U
(71) Applicant: Vaiani, Marco, I-06121 Perugia (IT)
(72) Inventor: Vaiani, Marco, I-06121 Perugia (IT)
(74) Representative: Modiano, Guido, Dr.-Ing.

(57) **Abstract**

Ball faucets and valves for hydraulic pipes, comprising: at least one valve body (12) with a rotating ball (13) associated with an actuation element (11), the valve body (12) being associable at least with a feed pipe (16) and at least with a delivery pipe (17); at least gaskets (21, 22) provided upstream and downstream of the valve body (12); the rotating ball (13) having a first axial through hole (18) and at least one open position, in which the first through axial hole (18) is axially aligned with the pipes (16, 17), and at least one closure position, in which the first axial through hole (18) is arranged at right angles to the pipes (16, 17); the rotating ball (13) having, on one of the walls that form the first axial through hole (18), at least one second hole (20) that is connected to the first axial through hole (18), has any desired geometric shape, has an axis that is rotated through approximately 90° with respect to the axis of the first axial through hole (18), and has chamfered edges.

## Description

The present invention relates to ball faucets and valves for hydraulic pipes as disclosed in the main claim.

More particularly, the invention relates to an improvement to faucets and valves of the ball type, aimed at extending the working life of these components and at preventing breakage and cracking.

The invention is conceived to ensure correct operation of these hydraulic components in particular environmental conditions, and particularly in conditions characterized by extreme temperature changes, with values close to or below zero, such as those typical in winter periods and/or in particular geographical areas.

Ball faucets and valves, installed along pressurized hydraulic pipes to adjust the outflow of water or of another fluid as desired, are known in the art.

Said faucets or valves usually have an actuation element, such as a lever or the like, that is externally accessible by the user; the actuation of said actuation element causes the rotation of a ball-shaped element or the like located inside the valve/faucet body.

Said ball-shaped element has at least one first open position, in which the axial through hole for the transit of the fluid is arranged along the axis of the pipes, and a second closure position, which is rotated through approximately 90° with respect to said first open position.

It is known that said hydraulic components are sensitive to low temperatures in the open, where they are commonly installed.

When the valve/faucet is closed, by moving the ball from the open position to the closed position, some water in fact remains stagnant inside the through hole that is provided in the ball inside the valve/faucet body.

At temperatures around or below 0°C, this water can freeze, and this can cause breakage and/or cracks of the valve/faucet body, requiring expensive replacement interventions.

In order to solve this drawback, which is particularly onerous for users who must resort to frequent and expensive replacement interventions, with the additional inconveniences arising from interruption in fluid delivery, and in order to achieve other additional advantages, Applicant has conceived, tested, and produced the present invention.

The present invention is disclosed and characterized in the main claim.

The dependent claims define further embodiments to the main solution concept.

The aim of the invention is to provide an improvement to conventional ball valves/faucets that significantly limits, to the point of eliminating them, the risks of breakage and malfunctions arising from the use of these components in harsh environmental conditions such as those occurring in winter.

This improvement allows the valve/faucet according to the invention to be used correctly even at temperatures below 0°C, with considerable advantages in terms of reliability, maintenance costs, component life, etcetera.

The valve/faucet according to the invention is of the conventional ball type and conventionally has an actuation element, such as a lever or the like, that turns a ball-shaped element or the like.

Said ball-shaped element is arranged inside a substantially spherical seat formed in a substantially cylindrical metal containment element having at least one element for connection to said lever-actuation element.

Said cylindrical metal element has means for connection at least to the feed pipe arranged upstream of the valve/faucet.

The ball has a first axial through hole, which is substantially axially aligned with the axis of the pipe when the valve/faucet is in the open position.

According to the invention, the ball has, in addition to said first through hole for the transit of the fluid, at least one second hole formed on one of the two walls of the ball that form said first through hole and connected to said first through hole.

When the valve/faucet is in the closed position, said second hole is adapted to connect the central part of the valve, that is to say, the inside of the ball, to the delivery pipe in the case of a valve or to the outside in the case of a faucet.

Advantageously, the axis of said second hole forms an angle of approximately 90° with respect to the axis of the first through hole provided on the ball.

Said second hole allows to discharge the fluid that has filled the inside of the ball as said ball passes from its open position to its closed position.

Discharge of the fluid may be complete or only partial, depending on the position in which the valve/faucet is installed.

The presence of said second hole ensures a decrease in the pressure inside the valve body since, even when a certain amount of fluid remains inside the ball, the pressure of said fluid is discharged respectively outside or towards the delivery pipe, according to the instance.

The valve/faucet according to the invention has a single assembly orientation, so as to ensure that said second hole is directed towards the delivery of the pipe and can perform its fluid discharge function.

According to a different embodiment, said second hole is arranged in a position that allows to connect, in the closed position, the first through hole to the feed pipe.

In this case, said first through hole continues in any case to be filled with fluid, but said fluid constitutes an uninterrupted mass together with the pressurized fluid that is present in the feed pipe.

In both of the illustrated cases for positioning the second hole in the ball, no isolated amounts of fluid fully enclosed inside a small volume stagnate inside the valve/faucet body, and this prevents said fluid from freezing and breaking said valve body.

According to the invention, the second hole is chamfered to reduce the friction that occurs between the sealing gaskets arranged laterally to the ball and said second hole.

The ball is furthermore chromium-plated to eliminate any oxidation arising from stagnation of the fluid.

According to a different embodiment, the ball is covered with non-stick material to reduce the risk of deposition of scale thereon.

According to the invention, the discharge hole can have any desired geometric shape, but circular and oval shapes are preferred.

In particular, the oval shape is preferred in large valves/faucets, since it ensures greater strength.

It is also possible to provide a plurality of second holes having appropriate dimensions and arranged on the same wall as said first through hole.

The invention can be applied to ball valves and faucets of any type, with pipe couplings, of the female-to-female, male-to-female, flanged, union type, etcetera, and made of essentially any material, such as brass, steel, aluminum, etcetera.

The accompanying figures are provided by way of non-limitative example and illustrate some preferred embodiments of the invention.

In the drawings:
figure 1 is a longitudinal sectional view of a ball faucet according to the invention, in open position;
figure 2 is a longitudinal sectional view of a ball valve according to the invention, in open position;
figure 3 is an enlarged-scale sectional view of the ball in closed position, together with the sealing gaskets;
figure 4 is a view of the ball of figure 3 in open position;
figure 5 is a view of a different embodiment of figure 4;
figure 6 is a view of a different embodiment of figure 3;
figure 7 is a front view of a gasket with ridges, used in the valve/faucet according to the invention.

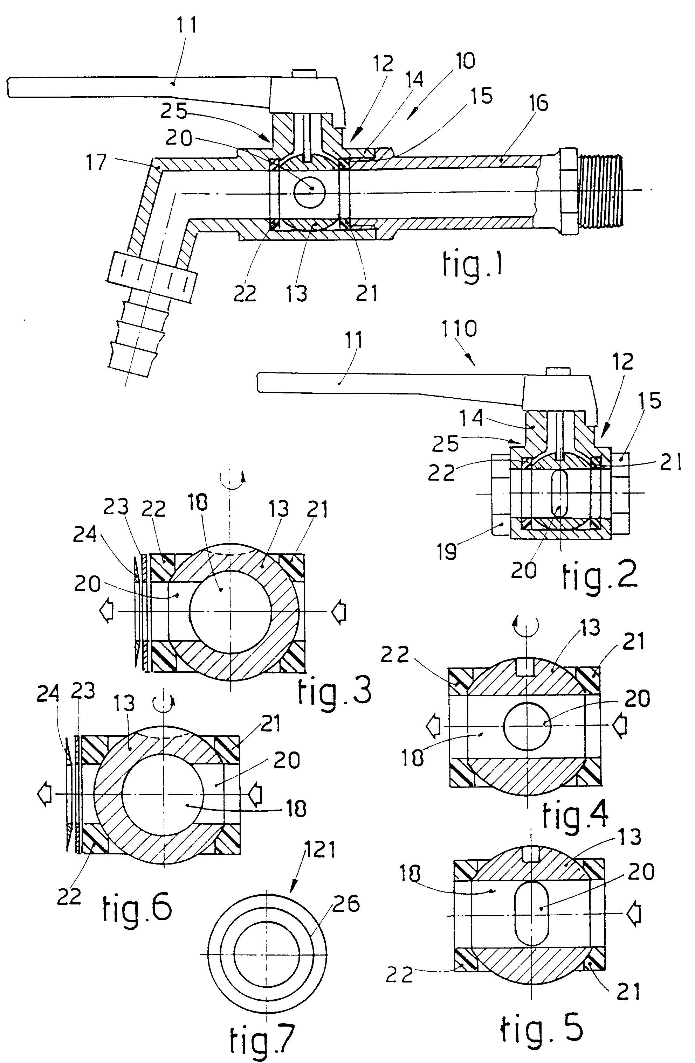

The ball faucet 10 shown in figure 1 and the ball valve 110 shown in figure 2 have a substantially conventional structure and configuration and have an actuation element 11 of the rotating lever type that is accessible by the user to adjust fluid delivery.

Said faucet 10/valve 110 has a valve body 12 comprising a ball 13 arranged inside a substantially spherical seat 25 formed on a substantially cylindrical containment element 14.

Said containment element 14 has, at its ends, at least means 15, constituted by a female thread in the specific case, for connection to the fluid feed pipe 16.

In the case of the faucet 10, the containment element 14 is associable with the fluid delivery element 17 or extends monolithically therefrom as in the present case.

In the case of the valve 110, the containment element 14 has means 19, constituted by a female thread, for connecting to the downstream pipe, which is not shown.

The ball 13 of the valve body 12 has a first axial through hole 18 to allow normal delivery of the fluid when the valve is placed in its open position.

Said ball 13 furthermore has, on one of its walls, a second hole 20 that is arranged substantially at right angles to the axis of the axial through hole 18.

Said second hole 20 can have a substantially circular shape, as shown in figures 1 and 3, or a substantially oval shape, as shown in figures 2 and 5, or can assume any other geometric shape.

According to a different embodiment, it is possible to provide a plurality of second holes 20 on said wall of the ball 13.

The second hole 20 is arranged, in the closure position of the ball 13 (figure 3), so that it is directed towards the fluid delivery duct 17 for connecting the inside of the valve body 12, that is to say, the first through hole 18, to the outside.

This allows to fully or at least partially drain said through hole 18 of the fluid that has remained stagnant inside during the closure of the faucet 10/valve 110.

This furthermore allows to cause a reduction in pressure inside the valve body 12 by connecting the through hole 18 to the outside.

According to this solution, the arrangement of the faucet 10/valve 110 is uniquely determined in order to achieve the positioning of the second hole 20 towards the outside in the closure position of the ball 13.

According to the embodiment shown in figure 6, the second hole 20 is formed on one of the walls of the ball 13 that form the through hole 18, so that in the closed position of the faucet 10/valve 110 said second hole 20 is directed towards the feed pipe 16.

This solution, too, allows to prevent breakage of the valve body 12 if ice forms, since the fluid that is present inside the through hole 18 forms a single mass together with the pressurized fluid that is present in said feed pipe 16 and therefore there are no enclosed and isolated amounts of fluid that stagnate inside a small volume.

Inside the valve body 12, the ball 13 is associated, upstream and downstream, with sealing gaskets or bushes, designated respectively by the reference numerals 21 and 22.

At least the upstream gasket can be of the double-seal type 121 with ridges 26, as shown in figure 7.

According to a different embodiment (figure 3), a compression unit is provided at least adjacent to the downstream sealing gasket 22 and comprises at least one flat washer 23 and a cup washer 24 that are arranged in succession towards the delivery pipe 17.

The flat washer 23 and the cup washer 24 are advantageously made of treated steel and, by keeping said downstream gasket 22 pressed against the ball 13, they have the purpose of ensuring a tighter seal and that plays are restored.

Owing to their compact size, the flat washer 23 and the cup washer 24 are easily insertable in the original seat of the gasket 22 without altering its characteristics.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. Ball faucets and valves for hydraulic pipes, having at least one valve body (12) with a rotating ball (13) that is associated with an actuation element (11), said valve body (12) being associable at least with a feed pipe (16) and at least with a delivery pipe (17), at least gaskets (21, 22) being provided upstream and downstream of the valve body (12), said rotating ball (13) having a first axial through hole (18) and at least one open position, in which said first through axial hole (18) is axially aligned with the pipes (16, 17), and at least one closure position, in which the first axial through hole (18) is arranged at right angles to the pipes (16, 17), characterized in that the rotating ball (13) has, on one of the walls that form the first axial through hole (18), at least one second hole (20) that is connected to said first axial through hole (18), has any desired geometric shape, has an axis that is rotated through approximately 90° with respect to the axis of the first axial through hole (18), and has chamfered edges.

2. Ball faucets and valves according to claim 1, characterized in that in the closed position of the rotating ball (13) the second hole (20) connects the first axial through hole (18) to the delivery pipe (17).

3. Ball faucets and valves according to claim 1, characterized in that in the closed position of the rotating ball (13) the second hole (20) connects the first axial through hole (18) to the feed pipe (16).

4. Faucets and valves according to one or more of the preceding claims, characterized in that the second hole (20) has a substantially circular shape.

5. Faucets and valves according to any one of the preceding claims 1-3, characterized in that the second hole (20) has a substantially oval shape.

6. Faucets and valves according to any one of the preceding claims, characterized in that the rotating ball (13) is entirely chromium-plated.

7. Faucets and valves according to any one of the preceding claims, characterized in that the rotating ball (13) is coated with non-stick material.

8. Faucets and valves according to any one of the preceding claims, characterized in that at least the downstream gasket (22) cooperates with a compression unit comprising at least one cup washer (24).

9. Faucets and valves according to any one of the preceding claims, characterized in that at least the upstream gasket (21) is of the type (121) with a double seal and ridges (26).
